# EUROPÄISCHE PATENTSCHRIFT

(11) **EP 1 363 017 B1**
(45) Veröffentlichungstag und Bekanntmachung des Hinweises auf die Patenterteilung: **04.01.2006**
(21) Anmeldenummer: 03002909.4
(22) Anmeldetag: 10.02.2003
(51) Int. Cl.: F02N 11/04, F02N 11/08, H02M 7/00

(54) **Schaltungsanordnung für elektrische Maschinen (Startgeneratoren) mit passiver Ladungspumpe**
Circuit layout for electric motor (starter-generator) with passive charge pump
Circuit pour une machine électrique (démarreur-générateur) avec une pompe de charge passive

(30) Priorität: 03.05.2002 DE 10219819
(43) Veröffentlichungstag der Anmeldung: 19.11.2003
(73) Patentinhaber: ROBERT BOSCH GMBH, 70442 Stuttgart (DE)
(72) Erfinder: Kuehner, Jochen, 71522 Backnang-Heiningen (DE); Beulich, Klaus, 74343 Sachsenheim (DE)

(56) Entgegenhaltungen:
- EP-A- 1 253 698
- US-A- 5 818 115
- PATENT ABSTRACTS OF JAPAN vol. 017, no. 064 (M-1364), 8. Februar 1993 (1993-02-08) & JP 04 271209 A (HINO MOTORS LTD), 28. September 1992 (1992-09-28)
- IAN HEGGLUN'S: "STEPPING OUT" ELECTRONICS WORLD AND WIRELESS WORLD, REED BUSINESS PUBLISHING, SUTTON, SURREY, GB, Bd. 102, Nr. 1726, 1. Oktober 1996 (1996-10-01), Seiten 795-797,805-806, XP000633146 ISSN: 0959-8332

## Beschreibung

Die Erfindung geht aus von einer Schaltungsanordnung für elektrische Maschinen nach der Gattung des Hauptanspruchs und betrifft insbesonders Anlaufschaltungen/für Starter-Generatoren zum Einsatz in einem Kraftfahrzeug.

### Stand der Technik

Üblicherweise werden in Kraftfahrzeugen zwei elektrische Maschinen eingesetzt, einmal ein Generator, der vom Fahrzeug angetrieben wird und elektrische Energie zur Versorgung der Bordnetzverbraucher und zur Ladung der Batterie erzeugt und weiterhin ein Starter, der als Elektromotor arbeitet und im Startfall den Motor des Fahrzeugs auf eine erforderliche Mindestdrehzahl bringt. Es sind aber auch Systeme bekannt, die eine einzige elektrische Maschine aufweisen, die als Starter-Generator ausgestaltet ist und sowohl den Motorstart als auch die Erzeugung der elektrischen Energie bewerkstelligt.

Solche Starter-Generatoren sind beispielsweise Schwungrad-Starter-Generatoren oder Kurbelwellen-Starter-Generatoren, die direkt mit der Kurbelwelle des Motors in Verbindung stehen. Die eingesetzten Starter-Generatoren sind dabei Drehstrommaschinen, die über eine Leistungselektronik, die eine Pulswechselrichterbrücke umfasst, mit der Fahrzeugbatterie in Verbindung stehen. Die Ansteuerung der Puls-Wechselrichter bzw. Pulsumrichter erfolgt mit Hilfe einer eigenen Stromversorgung bzw. einer zugehörigen Steuerelektronik. Ist die elektrische Maschine beispielsweise eine permanent erregte Synchronmaschine, so wird bei sich drehender Maschine eine Spannung erzeugt, unabhängig davon, ob die Elektronik aktiviert ist oder nicht. Bei entsprechend hohen Drehzahlen der Synchronmaschine kann dies zu einer Überschreitung der erlaubten Spannung führen und es besteht die Gefahr, dass die Elektronik des Starter-Generators sowie die Bordnetzelektronik an sich zerstört werden kann.

Ein Fahrzeugbordnetz mit einem Starter-Generator sowie ein Verfahren zur Regelung eines solchen Starter-Generators, der über eine Pulswechselrichterbrücke mit der Fahrzeugbatterie in Verbindung steht, wird beispielsweise in der DE 197 33 212 A1 beschrieben. Bei diesem bekannten System werden die Pulswechselrichterelemente mit Hilfe einer Reglerelektronik in geeigneter Weise so angesteuert, dass im generatorischen Betrieb eine optimale Generatorregelung und damit eine maximale Erzeugung von elektrischer Leistung gewährleistet ist. Gleichzeitig wird durch geeignete Ansteuerung der Pulswechselrichterelemente sichergestellt, dass im Startfall die elektrische Maschine elektrische Energie aus der Batterie entnehmen kann und damit als Elektromotor arbeitet und den Fahrzeugmotor auf die Startdrehzahl beschleunigen kann.

Da sich das bekannte System vorzugsweise mit der optimalen Regelung der generatorisch wirkenden Maschine im Normalbetrieb abefasst, werden keine näheren Angaben für den Startfall gemacht und es wird daher auch keine spezielle Anlaufschaltung für Starter-Generatoren beschrieben.

Ansteuervorrichtungen für Starter von Verbrennungsmotoren sind prinzipiell bereits bekannt und werden beispielsweise in der DE-P 10 034 79.7 beschrieben. Diese bekannten Ansteuervorrichtungen für einen Starter zeigen auch Schaltungen, bei denen MOSFET-Schalttransistoren zum Einsatz kommen, über die beispielsweise die Haltewicklung des Starterrelais angesteuert wird. Dabei stellt einer dieser MOSFET-Transistoren den Startschalter dar. Die Ansteuerung der Schalttransistoren erfolgt mit Hilfe einer elektrischen Startsteuerung, die ihrerseits über eine Schnittstelle mit dem Motorsteuergerät in Verbindung ist und von diesem Informationen, beispielsweise Drehzahlinformationen, erhält. Dem als Startschalter arbeitenden MOSFET-Transistor ist gemäß einem der Ausführungsbeispiele eine Ladungspumpe zugeordnet.

Aus der US 5 818 115 A ist eine dynamoelektrische Maschine bekannt, mit deren Hilfe Doppelschichtkondensatoren aufgeladen werden sollen. Zwischen den Doppelschichtkondensatoren und einer Batterie sind Schalter angeordnet, die in besonderer Weise angesteuert werden sollen. Eine Auswertung der Phasenspannung ist nicht vorgesehen, daher kann auch nicht ohne weiteres erkannt werden, wann sich der Dynamo zu drehen beginnt.

Aus der JP 05292759 A ist eine Schaltungsanordnung für elektrische Maschinen bekannt, bei der die Schaltungsanordnung mit wenigstens einem Phasenanschluss der elektrischen Maschine in Verbindung steht. Weiterhin ist eine passive Ladungspumpe vorhanden, die direkt mit den Phasenwicklungen der elektrischen Maschine verbindbar ist. Am Ausgang der Schaltungsanordnung entsteht eine Versorgungsspannung.

### Vorteile der Erfindung

Die erfindungsgemäße Schaltungsanordnung für elektrische Maschinen mit den Merkmalen des Anspruchs 1 hat den Vorteil, dass ein sicherer Anlauf für die Stromversorgung der Steuerelektronik der elektrischen Maschine erfolgen kann. Die zugehörige Anlaufschaltung ist besonders einfach aufgebaut und kann auf einfache Art die sich drehende Maschine erkennen. Weiterhin ist die Anlaufschaltung besonders vorteilhafter Weise in der Lage, die Stromversorgung und damit die komplette Steuerelektronik zu aktivieren, insesonders gleich nach erkanntem Drehbeginn. Dies ist auch im deaktivierten Zustand der Elektronik möglich. In weiter besonders vorteilhafter Weise kann bei aktivierter Steuerelektronik durch entsprechende Maßnahmen die.Ausgangsspannung der dann als Generator arbeitenden elektrischen Maschine geregelt werden. Dabei ist besonders vorteilhaft, dass ein geringer Schaltungsaufwand erforderlich ist, der sich nur durch vier passive Bauteile auszeichnet. Weiterhin fließt in besonders vorteilhafter Weise kein Ruhestrom zum Versorgen der Ladungspumpe und es ist eine sichere Erkennung einer sich drehenden Maschine auch bei deaktivierter Steuerelektronik möglich.

Erzielt werden diese Vorteile durch eine Schaltungsanordnung, die eine passive Ladüngspumpe umfasst, welche mit dem Phasenanschluss einer beliebigen Halbbrücke der Umrichterbrücke verbunden ist.

Weitere Vorteile der Erfindung werden durch die in den Unteransprüchen angegebenen Merkmale erzielt. Dabei wird die passive Ladungspumpe in vorteilhafter Weise nur mittels zweiser Kondensatoren und zweier Dioden aufgebaut. Ein vorteilhafter Einsatz der erfindungsgemäßen Schaltungsanordnung ist bei Starter-Generatoren, insbesonders Kurbelwellen-Starter-Generatorenfür Fahrzeuge möglich.

### Zeichnung

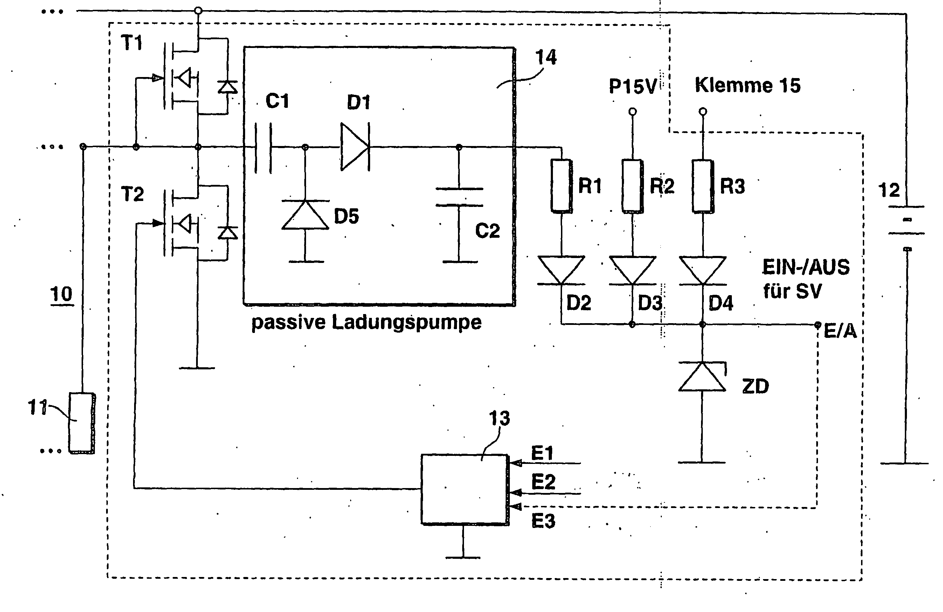

Ein Ausführungsbeispiel der Erfindung ist in der Zeichnung dargestellt und wird in der nachfolgenden Beschreibung näher erläutert.

### Beschreibung

In der einzigen Figur sind die für das Verständnis der Erfindung erforderlichen Bestandteile eines Fahrzeugbordnetzes dargestellt. Im einzelnen handelt es sich dabei um eine elektrische Maschine 10, beispielsweise einen Starter-Generator, vorzugsweise einen Kurbelwellen-Starter-Generator, der von einem nicht dargestellten Verbrennungsmotor beispielsweise eines Fahrzeugs angetrieben wird bzw. diesen im Startfall auf eine Mindestdrehzahl bringt. Von der elektrischen Maschine 10 ist lediglich eine der drei Phasenwicklungen 11 dargestellt, die beliebig wählbar ist.

Zum Betrieb der elektrischen Maschine ist ein Pulsumrichter vorhanden, der bei einer Drei-Phasen-Maschine sechs Pulswechselrichterelemente umfasst, die drei Halbbrücken bilden. Generell funktionsfähig ist die Schaltung aber auch für eine einzige Halbbrücke eines beliebigen Systems. In der Figur sind für eine Drei-Phasen-Maschine nur die beiden Pulswechselrichterelemente für die zur Phasenwicklung 11 gehörende Halbbrücke dargestellt. Die Pulswechselrichterelemente sind beispielsweise Transistoren, insbesonders MOSFETs T1 und T2 oder andere geegnete ansteuerbare Bauelemente.

Über diese Pulswechselrichterelemente mit den Transistoren T1, T2 ist die elektrische Maschine 10 mit der Batterie 12 verbindbar, wobei die Verschaltung so ist, dass ein Anschluß des Transistors T1 mit der Batterie verbindbar ist und ein Anschluß des Transistors T2 auf Masse liegt. Im Generatorbetrieb wird die Batterie über den Pulsumrichter geladen und im Motorbetrieb versorgt die Batterie 12 die elektrische Maschine.

Die Ansteuerung der Pulswechselrichterelemente erfolgt mit Hilfe eines elektronischen Spannungsreglers oder einer Steuerelektronik 13, das den Transistoren T1 und T2 sowie den übrigen nicht dargestellten Transistoren des Pulsumrichters die erforderlichen Ansteuersignale zuführt und die Transistoren zeitlich optimiert in den leitenden oder sperrenden Zustand versetzt. Dem elektronischen Spannungsregler bzw. einem entsprechenden Steuergerät oder einer Steuerelektronik 13 werden die für die Berechnung der optimalen Ansteuerung der Transistoren benötigten Informationen sowie über einen Eingang E1 zugeführt, die Spannungsversorgung für die Steuerelektronik erfolgt beispielsweise über den Eingang E2.

Die Transistoren T1, T2 des Pulsumrichter sind über eine passive Ladungspumpe 14 sowie über einen Widerstand R1 und eine Diode D2 mit einem Ein-/Ausgang E/A verbunden. über diesen Ein-/Ausgang E/A kann ein Ein- oder Ausschaltsignal für die Stromversorgung bereitgestellt werden, das der. Steuerelektronik 13 über deren Einschalteingang E3 zugeführt wird. Zur Stabilisierung der Spannung dient eine Zenerdiode ZD, die zwischen dem Ein-/Ausgang E/A und Masse liegt. über einen Widerstand R2 und eine Diode D3 ist der Ein-/Ausgang E/A mit der Klemme P15V verbunden. Die Klemme KL.15 steht über einen weiteren Widerstand R3 und eine Diode D4 mit dem Ein-/Ausgang E/A in Verbindung.

Die passive Ladungspumpe 14 umfasst einen ersten Kondensator C1, der mit dem Pulsumrichter verbunden ist, wobei der Anschluss des Kondensators C1 mit dem Verbindungspunkt zwischen den Transistoren T1 und T2 des Pulsumrichters direkt verbunden ist sowie eine Diode D1, die mit dem Kondensator C1 verbunden ist und mit ihrer Kathode mit einem weiteren Kondensator C2 in Verbindung steht. Eine weitere Diode D5 liegt zwischen der Verbindung des Kondensators C1 und der Diode D1, wobei die Verschaltung so ist, dass die Anode der Diode D5 auf Masse liegt

Da der Kondensator C1 mit dem Phasenabgang der Pulsumrichterbrücke verbunden ist, wird die Gleichspannung am Phasenausgang des Generators entkoppelt. Dreht sich die elektrische Maschine, so wird eine Wechselspannung induziert, die am Phasenabgang auftritt. Diese induzierte Wechselspannung wird über die Dioden D1 und D5 gleichgerichtet. Dadurch lädt sich der Kondensator C2 auf. Die nachfolgende Schaltung erzeugt dann das erforderliche Ein-/Ausschaltsignal für die Stromversorgung bzw. für die Steuerelektronik 13 und gewährleistet damit einen sicheren Anlauf der Steuerelektronik und damit einen sicheren Betrieb der elektrischen Maschine bzw. des Starter-Generators.

Die gesamte Schaltungsanordnung ist üblicherweise Bestandteil eines Steuergerätes 15, beispielsweise eines Bordnetzsteuergerätes.

## Patentansprüche

1. Schaltungsanordnung für elektrische Maschinen, die über wenigstens eine Halbbrücke eines Umrichters mit einer Batterie verbindbar sind und die Schaltungsanordnung mit wenigstens einem Phasenanschluss der elektrischen Maschine in Verbindung steht, mit wenigstens einer passiven Ladungspumpe, die direkt mit den Phasenwicklungen der elektrischen Maschine verbindbar ist und deren anderer Anschluss über weitere elektronische Mittel zu einem Ein-/Ausgang führt, **dadurch gekennzeichnet, dass** die passive Ladungspumpe wenigstens zwei Kondensatoren (C1), (C2) und zwei Dioden (D 1), (D5) umfasst und der Kondensator (C 1) mit dem Phasenabgang der Halbbrücke der elektrischen Maschine verbunden ist und dass am Ein-/Ausgang ein Ein-/Ausschaltsignal für eine Stromversorgung erzeugt wird.

2. Schaltungsanordnung für elektrische Maschinen nach Anspruch 1, **dadurch gekennzeichnet, dass**, dass die Anode der Diode (D1) mit dem Kondensator (C1) und die Kathode der Diode (D1) mit dem Kondensator (C2) in Verbindung steht und der Kondensator (C2) mit Masse verbunden ist und die Kathode der Diode (D5) mit der Verbindung zwischen dem Kondensator (C1) und der Diode (D1) verbunden ist und die Anode der Diode (D5) auf Masse liegt.

3. Schaltungsanordnung für elektrische Maschinen nach einem der vorhergehenden Ansprüche, **dadurch gekennzeichnet, dass** die elektrische Maschine ein Starter-Generator, insbesondere ein Kurbelwellen-Starter-Generator für ein Kraftfahrzeug ist.

## Claims

1. Circuit arrangement for electrical machines which can be connected to a battery via at least one half-bridge of a converter, with the circuit arrangement being connected to at least one phase connection of the electrical machine, having at least one passive charge pump which can be connected directly to the phase windings of the electrical machine and whose other connection is connected via further electronic means to an input/output, **characterized in that** the passive charge pump has at least two capacitors (C1), (C2) and two diodes (D1), (D5), and the capacitor (C1) is connected to the phase output of the half-bridge of the electrical machine, and in than an on/off switching signal for an electrical power supply is produced at the input/output.

2. Circuit arrangement for electrical machines according to Claim 1, **characterized in that** the anode of the diode (D1) is connected to the capacitor (C1), and the cathode of the diode (D1) is connected to the capacitor (C2), with the capacitor (C2) being connected to earth, and the cathode of the diode (D5) is connected to the connection between the capacitor (C1) and the diode (D1), and the anode of the diode (D5) is connected to earth.

3. Circuit arrangement for electrical machines according to one of the preceding claims, **characterized in that** the electrical machine is a starter generator, in particular a crankshaft starter generator for a motor vehicle.

## Revendications

1. Circuit pour machines électriques pouvant être reliées par au moins un demi-pont d'un convertisseur à une batterie, le circuit étant relié à au moins une connexion de phase de la machine électrique, comprenant au moins une pompe de charge passive pouvant être directement reliée aux enroulements de phase de la machine électrique et dont l'autre connexion conduit, via d'autres moyens électroniques, jusqu'à une entrée/sortie,
**caractérisé en ce que**
la pompe de charge passive comprend au moins deux condensateurs (C1), (C2) et deux diodes (D1), (D5), le condensateur (C1) est relié à la sortie de phase du demi-pont de la machine électrique et un signal d'activation/désactivation pour une alimentation en courant est généré au niveau de l'entrée/sortie.

2. Circuit pour machines électriques selon la revendication 1,
**caractérisé en ce que**
l'anode de la diode (D1) est reliée au condensateur (C1), la cathode de la diode (D1) est reliée au condensateur (C2), le condensateur (C2) est relié à la masse, la cathode de la diode (D5) est reliée à la liaison entre le condensateur (C1) et 1a diode (D1), et l'anode de la diode (D5) est reliée à la masse.

3. Circuit pour machines électriques selon l'une des revendications précédentes,
**caractérisé en ce que**
la machine électrique est un démarreur-générateur, en particulier un démarreur-générateur de vilebrequin pour un véhicule automobile.
